# EUROPÄISCHE PATENTSCHRIFT

(11) **EP 2 750 498 B1**
(45) Veröffentlichungstag und Bekanntmachung des Hinweises auf die Patenterteilung: **06.06.2018**
(21) Anmeldenummer: 11752217.7
(22) Anmeldetag: 02.09.2011
(51) Int. Cl.: A01M 23/30

(54) **SCHLAGFALLE**
SNAP TRAP
PIÈGE A SOURIS

(43) Veröffentlichungstag der Anmeldung: 09.07.2014
(73) Patentinhaber: Swissinno Solutions AG, 9000 St. Gallen (CH)
(72) Erfinder: LE LAIDIER, Gabriel, 9000 St. Gallen (CH); JANCIC, Silvin, 5610 Villmergen (CH); WALSTAD, Dennis, Elburn, IL 60119 (US)
(74) Vertreter: Bohnenberger, Johannes
(86) Internationale Anmeldenummer: PCT/EP2011/065217
(87) Internationale Veröffentlichungsnummer: WO 2013/029689

(56) Entgegenhaltungen:
- EP-A1- 1 731 033
- WO-A1-97/00607
- US-A- 5 706 601

## Beschreibung

Die Erfindung betrifft eine Schlagfalle für Kleintiere wie Mäuse oder Ratten gemäss dem Oberbegriff des Anspruchs 1. Schlagfallen sind seit längerer Zeit in vielfältigen Ausführungen bekannt und gebräuchlich. Diese Fallen sind jedoch meist verhältnismässig sperrig, schwierig zu handhaben und teuer in der Herstellung. Nicht zuletzt bilden derartige Fallen oft auch ein Verletzungs- und Infektionsrisiko, da der Schlagmechanismus oft frei zugänglich ist und beispielsweise auch von einem Benutzer, spielenden Kindern oder Haustieren ausgelöst werden kann. Ausserdem weisen derartige Fallen meist keinen Transportbehälter auf, sodass eine die Falle tragende Person von einem möglicherweise nur verletzten Tier gebissen, beschmutzt oder anderen Gefahren ausgesetzt sein kann.

Es sind daher tunnelförmig ausgebildete Fallen bekannt, in welchen der Schlagmechanismus in einem geradlinigen, tunnelförmigen Innenraum untergebracht ist. Ein geradliniger Tunnel hat dabei den Vorteil, dass er eher von einem Kleintier begangen wird, als beispielsweise verwinkelte oder gekrümmte Gänge. Das tunnelförmige Gehäuse bildet dabei zudem eine effektive Transporteinrichtung, in welcher das Tier vom Schlagmechanismus festgehalten ist, ohne dass der Träger einer Verletzung oder Verschmutzung oder irgendeiner widrigen Berührung mit dem Tier ausgesetzt ist. Eine gattungsgemäss vergleichbare Schlagfalle ist beispielsweise in der GB 2 332 356 oder in der WO 97/00607 A1 beschrieben. Diese Schlagfalle umfasst ein tunnelförmiges Gehäuse, in welchem ein Schlagmechanismus angeordnet ist. Der Schlagmechanismus umfasst einen federgespannten Drahtbügel, welcher über eine im Tunnel angeordnete Trittplattform ausgelöst werden kann. Der Drahtbügel weist aus dem Gehäuse nach aussen ragende Betätigungselemente auf, mit welchen die Falle von einem Benutzer von aussen aus einer Schlagstellung in einer Bereitschaftsstellung gebracht werden kann. Die Falle umfasst dabei zusätzlich einen Verschlussmechanismus für die Eingangsöffnung, sodass das Kleintier die Falle nicht verlassen kann. Zum Entnehmen eines in der Falle festgehaltenen Tieres muss ein Deckel des Gehäuses geöffnet werden. Dabei besteht allerdings das Risiko, dass ein Benutzer von einem noch lebenden Tier verletzt bzw. beschmutzt wird. Auch wenn das Tier bereits getötet sein sollte, bleibt der Benutzer nicht vollständig vom Kadaver isoliert. Ausserdem ist der Schlagmechanismus schwierig zu spannen und weist eine vergleichsweise filigrane Konstruktion auf.

Es ist deshalb die Aufgabe der vorliegenden Erfindung, die Nachteile im Stand der Technik zu vermeiden und insbesondere eine Schlagfalle zu schaffen, welche einen Kontakt mit einem in der Schlagfalle festgehaltenen Tier verhindert. Zudem soll die Schlagfalle robust und einfach in der Handhabung sowie sicher gegenüber einer Verletzung von Mensch oder Haustier sein. Die Schlagfalle soll zudem eine einfache Konstruktion aufweisen und einfach zu reinigen sein.

Diese Aufgaben werden von einer Schlagfalle mit den Merkmalen des Anspruchs 1 gelöst. Dieser betrifft eine Schlagfalle für Kleintiere wie Mäuse oder Ratten mit einer Schlagvorrichtung, welche in eine Schlagstellung und eine Bereitschaftsstellung bringbar ist. Die Schlagfalle umfasst ein Gehäuse mit einem Boden und einem länglichen, an beiden Längsenden offenen Innenraum, an dessen einen Längsende eine Eingangsöffnung zu einem Eingangsabschnitt des Gehäuses und an dessen anderen Längsende in einem Schlagbereich des Gehäuses die Schlagvorrichtung angeordnet ist. Die Schlagvorrichtung umfasst einen Schlaghebel und einen Auslösehebel, wobei der Schlaghebel bei einem Übergang von der Schlagstellung in die Bereitschaftsstellung gegen die Federkraft eines Schlagfederelements vorspannbar ist und der Schlaghebel in der Bereitschaftsstellung durch den Auslöshebel direkt oder indirekt lösbar arretierbar ist. Der Auslösehebel ist derart angeordnet, dass die Arretierung des Schlaghebels durch ein im Innenraum vorhandenes Kleintier über den Auslösehebel lösbar ist. Die Erfindung zeichnet sich dadurch aus, dass die Schlagvorrichtung zum wenigstens teilweisen Verschluss einer endseitigen Öffnung des Innenraums im Schlagbereich des Gehäuses ausgebildet ist, und insbesondere die Öffnung vollständig verschliesst, wenn die Schlagvorrichtung in der Schlagstellung ist.

Ein Boden des Gehäuses bezeichnet hier und im Folgenden einen Wandbereich des Gehäuses bzw. des Innenraums, welcher in betriebsbereitem Zustand auf einer Standfläche bzw. nahe bei einer Standfläche angeordnet ist, auf welcher die Schlagfalle aufgestellt ist. Die Längsachse des Gehäuses ist in betriebsbereitem Zustand weitgehend parallel zur Standfläche ausgerichtet.

Erfindungsgemäss bildet die Schlagvorrichtung in der Schlagstellung einen Verschluss, welcher die endseitige Öffnung des Innenraums am eingangsöffnungsfernen Längsende des Gehäuses, d.h. im Schlagbereich, verschliesst. Der Verschluss soll sicherstellen, dass ein Kontakt eines Benutzers oder eines Haustieres mit einem in der Schlagfalle festgehaltenen Tier bzw. Kadaver ausgeschlossen ist. Ebenso soll verhindert sein, dass ein Benutzer oder ein Haustier die Falle von aussen auslösen können. Bevorzugt ist die Schlagvorrichtung derart ausgebildet, dass auch im der Bereitschaftsstellung der Innenraum endseitig zumindest teilweise abgeschlossen ist. In diesem Fall besteht keine nennenswerte Gefahr für einen Benutzer oder ein Haustier, die Falle aufgrund ungewollter Manipulation von aussen auszulösen. Besonders bevorzugt kann die Schlagvorrichtung auch derart ausgebildet sein, dass sowohl in der Schlagstellung als auch in der Bereitschaftsstellung die endseitige Öffnung vollständig verschlossen ist.

Indem Komponenten der Schlagvorrichtung einen Verschluss bilden, können diese Teile auch direkt von aussen zugänglich an der Falle vorgesehen sein. Teile der Schlagvorrichtung, welche kein Verletzungsrisiko darstellen und z.B. für eine Manipulation der Vorrichtung durch einen Benutzer vorgesehen sind, können daher ohne zusätzliche konstruktive Massnahmen direkt an Verschlusskomponenten der Schlagvorrichtung ausgebildet und von aussen zugänglich sein. Beispielsweise können aussenseitig direkt an einer Komponente der Schlagvorrichtung Betätigungselemente vorgesehen sein, um die Schlagfalle auf einfache Weise in die Bereitschaftsstellung bringen zu können, d.h. zu spannen.

Hingegen können Bereiche oder Elemente der Schlagvorrichtung, welche ein Verletzungsrisiko darstellen, im Innenraum angeordnet sein, sodass sie zumindest in der Schlagstellung von aussen nicht zugänglich sind. Beispielsweise können ein Schlagelement, welches für den tödlichen Schlag am Schlaghebel vorgesehen sein kann, sowie das Schlagfederelement vollständig im Innenraum angeordnet sein.

Die erfindungsgemässe Ausbildung der Schlagfalle ermöglicht auch einen besonders einfachen Zusammenbau, indem beim Zusammenbau grundsätzlich nämlich einzig die Schlagvorrichtung im Schlagbereich des Gehäuses eingesetzt zu werden braucht um die Falle betriebsbereiten Zustand zu bringen. Ein Anbringen weiterer Gehäuseteile oder anderen Komponenten zum Schutz oder zum endseitigen Abschluss des Gehäuses ist nicht erforderlich.

Das Gehäuse sowie verschiedene Komponenten der Schlagvorrichtung sind bevorzugt auf einfache Weise als Formteile z.B. aus einem Kunststoff, bevorzugt im Spritzgussverfahren hergestellt. Die Schlagfalle kann in diesem Fall im Bedarfsfall auf besonders einfache Weise gereinigt werden, da sie ohne Folgen für die Funktonalität abwaschbar ist. Selbstverständlich sind auch andere Materialien wie beispielsweise Holz denkbar.

Es versteht sich, dass die Schlagfalle mit Vorteil auch eine Schliessvorrichtung für die Eingangsöffnung aufweisen kann, welche durch ein im Innenraum vorhandenes Kleintier auslösbar ist und mit welcher die Eingangsöffnung verschliessbar ist. Dies hat den Vorteil, dass das Kleintier bei ausgelöster Schliessvorrichtung nicht mehr aus dem Innenraum der Falle gelangen kann, wenn es einmal eingetreten ist. Hierzu ist die Schliessvorrichtung bevorzugt unabhängig von der Schlagvorrichtung über ein Auslöseelement wie beispielsweise eine Trittplattform, auslösbar. Es ist aber selbstverständlich auch denkbar, dass die Schliessvorrichtung zusammen mit der Schlagvorrichtung auslösbar ist und so den Kontakt mit einem in der Falle festgehaltenen Kleintier bzw. Kadaver auch von der Eingangsöffnung her verhindert.

Die Schlagvorrichtung weist erfindungsgemäss einen oder mehrere Wandabschnitte auf, welche in der Schlagstellung den Innenraum endseitig verschliessen, wobei der oder die Wandabschnitte in der Schlagstellung in und/oder auf der endseitigen Öffnung des Innenraums angeordnet ist bzw. sind, wobei am Schlaghebel ein Wandabschnitt ausgebildet ist . Indem die ohnehin vorhanden Komponenten der Schlagvorrichtung Wandabschnitte aufweisen, welche auch zum endseitigen Abschluss des Innenraums dienen, erfüllen diese Komponenten eine Doppelfunktion und ermöglichen eine besonders einfache Konstruktion der Schlagfalle mit wenigen Teilen. Zudem können die Wandabschnitte als robuste Konstruktionselemente der betroffenen Komponenten eine hohe Stabilität dieser Komponenten sicherstellen.

In einer bevorzugten Ausführungsform ist der Schlaghebel um eine quer zur Längsrichtung und parallel zum Boden des Gehäuses angeordnete geometrische Schwenkachse schwenkbar am Gehäuse gelagert. Bevorzugt ist die Schwenkachse in einem bodennahen Bereich am eingangsöffnungsfernen Längsende des Innenraums, d.h. am schlagvorrichtungsseitigen Längsende im Schlagbereich, angeordnet. Der Schlaghebel ist somit bezüglich des Innenraums endseitig angeordnet und kann aufgrund der bodennahen Anordnung der Schwenkachse auf einfache Weise von einem Benutzer verschwenkt werden.

Bevorzugt wird der Schlaghebel dabei beim Übergang von der Schlagstellung in die Bereitschaftsstellung entgegen der Federkraft des Schlagfederelements vom Innenraum weg nach aussen geklappt. Das Schlagfederelement kann dabei auf einfache Weise als Schenkelfeder ausgebildet sein. Die Schenkelfeder umfasst vorliegend bevorzugt zwei Wicklungen, welche über einen Bügel miteinander verbunden sind. Von jeder der Wicklungen erstreckt sich ein Schenkel längs einer Seitenwand des Gehäuses zur Abstützung am Gehäuse. Der Bügel ist am Schlaghebel abgestützt, sodass der Bügel gegenüber dem Gehäuse über die Wicklungen mit einer Federkraft beaufschlagt ist. Die Schenkelfeder kann ebenfalls im Innenraum des Gehäuses angeordnet sein und ist somit gemäss der Erfindung wenigstens in der Schlagstellung vor einem Zugriff von aussen geschützt. Bevorzugt weist der Schlaghebel Aufnahmeräume für die Wicklungen der Schenkelfeder auf, in welche die Wicklungen der Feder eingesetzt werden können, ohne dass zur Halterung ein Achsstutzen vorhanden zu sein braucht. Es versteht sich, dass je nach Anwendung auch anders ausgebildete Federelemente vorteilhaft sein können.

Der Schlaghebel ist derart mit der Federkraft beaufschlagt, dass beim Auslösen der Schlagfalle der Schlaghebel zum Innenraum hin und in diesen hineingeschwenkt wird, wobei ein zum Innenraum gerichtetes Schlagelement wie z.B. eine Schlagplatte mit Schlagleiste zur Tötung des Kleintieres am Schlaghebel vorgesehen sein kann.

Es versteht sich, dass denkbare Lager oder Gelenke, welche die geometrische Schwenkachse des Schlaghebels definieren, auf vielfältig bekannte Weise ausgebildet sein können. Vorliegend sind am Schlaghebel bevorzugt seitlich nach aussen ragende Gelenknocken ausgebildet, welche in entsprechenden Gelenkpfannen im Gehäuse schwenkbar gelagert sind.

Mit Vorteil weist der Schlaghebel eine Schlagplatte mit Schlagleiste auf, welche in der Schlagstellung in den Innenraum hineinragt und in einem schwenkachsenfernen Bereich im Wesentlichen in senkrechter Richtung am Schlaghebel ansetzt. Die Schlagleiste ist dabei dazu vorgesehen, dem Kleintier in einem schmalen und definierten Bereich einen tödlichen Schlag zu versetzen, wenn die Schlagvorrichtung ausgelöst wird. In der Schlagstellung ist die Schlagplatte vollständig im Innenraum angeordnet und durch den von der Schlagvorrichtung gebildeten Abschluss des Gehäuses vor einem Zugriff von aussen geschützt. Die Schlagleiste ist bevorzugt parallel zur Schwenkachse ausgerichtet.

Vorzugsweise ist die Schlagplatte als gekrümmte Fläche mit mantelseitig konstantem Abstand zur Schwenkachse des Schlaghebels ausgebildet. Damit ist sichergestellt, dass ein für ein ungehindertes Verschwenken des Schlaghebels erforderlicher Freiraum aufgrund des konstanten Abstandes der Schlagplatte von der Schwenkachse minimal gewählt werden kann, ohne dass sich beim Verschwenken ein Spalt zwischen der Schlagplatte und in radialer Richtung direkt benachbarten Komponenten ergibt.

Für eine einfache Handhabung weist der Schlaghebel bevorzugt einen Betätigungsausleger auf, mit welchem der Schlaghebel von aussen nach Art des Spannhahns gegen die Kraft des Schlagfederelements vom Innenraum weg nach aussen schwenkbar ist, um die Schlagvorrichtung aus der Schlagstellung in die Bereitschaftsstellung zu bringen. Damit ergibt sich eine besonders einfache Handhabung der Schlagfalle, welche nach Art eines Spannhahns einer Schusswaffe z.B. mit dem Daumen gespannt werden kann. Der Betätigungsausleger kann hierbei mit Vorteil eine Riffelung aufweisen, um ein Abrutschen zu verhindern.

Mit Vorteil ist auch der Auslösehebel um eine quer zur Längsrichtung und parallel zum Boden des Gehäuses angeordnete geometrische Schwenkachse schwenkbar am Gehäuse gelagert, wobei insbesondere die Schwenkachse des Auslösehebels der Schwenkachse des Schlaghebels in Längsrichtung zur Eingangsöffnung hin vorgelagert ist. Der Auslösehebel reicht somit in Längsrichtung weiter in den Innenraum zur Eingangsöffnung hin, als der Schlaghebel. Wie im Falle des Schlaghebels versteht es sich, dass die Lager, welche die geometrische Schwenkachse definieren, auf unterschiedliche Weise ausgebildet sein können. Bevorzugt sind auch am Auslösehebel seitlich nach aussen ragende Gelenknocken ausgebildet, welche in entsprechenden Gelenkpfannen im Gehäuse schwenkbar gelagert sind.

Mit Vorteil weist der Auslösehebel zwei Hebelarme auf, welche sich seitlich, innenseitig entlang von Seitenwänden des Gehäuses von der Schwenkachse des Auslösehebels weg erstrecken, insbesondere in einer Richtung von der Eingangsöffnung zum Schlaghebel hin. Indem die Hebelarme entlang der Seitenwände verlaufen, kann der Auslösehebel zu beiden Seiten am Gehäuse gelagert sein, ohne dass ein Durchgang im Innenraum vom Auslösehebel wesentlich beeinträchtigt ist. Ein in den Eingangsbereich des Innenraums eingetretenes Kleintier kann somit ungehindert zum Schlaghebel und damit in einen Schlagbereich der Schlagvorrichtung vordringen.

Es versteht sich, dass der Auslösehebel grundsätzlich auch nur einen Hebelarm aufweisen kann, wobei aus Stabilitätsgründen allerdings die Ausführung mit zwei Hebelarmen und einer beidseitigen Lagerung bevorzugt ist. Mit Vorteil können sich die Hebelarme über den Bereich der Schwenkachse in Wippenarme fortsetzen, welche bevorzugt den Hebelarmen weitgehend gegenüberliegend angeordnet sind, sodass der Auslösehebel über die Wippenarme beispielsweise betätigt oder mit einer Federkraft beaufschlagt werden kann.

Bevorzugt ist am Auslösehebel an den schwenkachsenfernen Enden der Hebelarme eine Trittplattform ausgebildet, welche sich nahe dem Boden quer durch den Innenraum erstreckt. Die Trittplattform ist insbesondere in einem Bereich angeordnet, welcher von der Eingangsöffnung in Längsrichtung weiter entfernt ist, als ein Bereich in welchem die Schlagleiste des Schlaghebels in der Schlagstellung angeordnet ist. Damit ist sichergestellt, dass ein Kleintier die Schlagvorrichtung erst dann auslöst, wenn es sich in der gewünschten Position für den tödlichen Schlag befindet.

Bevorzugt ist unterhalb der Trittplattform ein Träger für einen Köder ausgebildet. Der Träger kann dabei bevorzugt quer zur Längsrichtung in eine entsprechende Aussparung im Gehäuse eingeschoben werden, sodass er auf einfache Weise von aussen in den Innenraum eingebracht bzw. ausgetauscht werden kann. Der Köder kann somit unabhängig von der Auslösevorrichtung und lediglich als Lockmittel eingesetzt werden. Bevorzugt ist der Träger in der Schlagstellung von der Trittplattform des Auslösehebels verschlossen, sodass der Köder frisch bleibt, wenn die Falle nicht in Benutzung ist. In der Bereitschaftsstellung kann die Trittplattform angehoben sein, sodass der Köder z.B. einen Lockduft verströmen kann.

Mit Vorteil ist der Auslösehebel im Bereich der Trittplattform bei einem Verschwenken um seine Schwenkachse über seitlich angeordnete Führungsnocken in einer Kurvenführung am Gehäuse geführt. Damit ist in dem Bereich, welcher für die Betätigung des Auslösehebels durch das Kleintier vorgesehen ist, eine gut definierte Führung des Auslösehebels sichergestellt. Einerseits kann damit eine sichere und zuverlässige Auslösung erreicht werden, während andererseits über entsprechend vorgesehene Anschläge der Kurvenführung ein Schwenkbereich des Auslösehebels begrenzt werden kann.

Mit Vorteil umfasst die Schlagvorrichtung einen Sperrhebel, welcher in der Bereitschaftsstellung lösbar am Auslöshebel arretierbar ist und an welchem der Schlaghebel in der Bereitschaftsstellung lösbar arretierbar ist. Grundsätzlich sind zwar auch Schlagvorrichtungen denkbar, welche einen Auslösehebel aufweisen, an welchem der Schlaghebel direkt verrastbar ist. Aufgrund des zusätzlichen Sperrhebels kann allerdings die für die Auslösung erforderliche Kraft deutlich verringert werden. Eine Kraft des Schlagfederelements kann damit vergleichsweise gross sein, während die Schlagvorrichtung auch noch von sehr leichten Kleintieren ausgelöst werden kann.

Der Sperrhebel der Schlagvorrichtung ist bevorzugt um eine quer zur Längsrichtung und parallel zum Boden des Gehäuses angeordnete geometrische Schwenkachse schwenkbar am Gehäuse gelagert. Die Schwenkachse ist dabei mit Vorteil in einem bodenfernen Bereich am eingangsöffnungsfernen Längsende des Innenraums angeordnet. Damit sind der Schlaghebel aufgrund der bodennahen Anordnung seiner Schwenkachse und der Sperrhebel optimal zueinander angeordnet, um miteinander zusammenwirken zu können. Vorzugsweise ist dabei die Schwenkachse in Längsrichtung zwischen den Schwenkachsen des Schlaghebels und des Auslösehebels angeordnet. Der Sperrhebel kann aufgrund dieser Anordnung optimal mit Schlaghebel und Auslösehebel zusammenwirken.

Wie im Falle des Schlaghebels oder des Auslösehebels versteht es sich, dass die Lager, welche die geometrische Schwenkachse definieren, auf unterschiedliche Weise ausgebildet sein können. Bevorzugt sind seitlich nach aussen ragende Gelenknocken ausgebildet, welche in entsprechenden Gelenkpfannen im Gehäuse schwenkbar gelagert sind.

Bevorzugt ist sowohl am Schlaghebel als auch am Sperrhebel jeweils ein Wandabschnitt ausgebildet, welche Wandabschnitte wenigstens in der Schlagstellung gemeinsam einen, bevorzugt vollständigen, endseitigen Abschluss des Innenraums bilden. Die Wandabschnitte am Schlaghebel und am Sperrhebel stossen dabei bevorzugt bündig aneinander und gehen weitgehend bündig in die Aussenwand des Gehäuses über, sodass sich in der Schlagstellung in diesem Bereich eine weitgehend stufenfreie Aussenseite ergibt. Bevorzugt überdeckt dabei der Wandabschnitt des Schlaghebels einen wesentlichen Teil der Öffnung, während ein flächenmässig kleinerer Wandabschnitt des Sperrhebels einen vom Wandabschnitt des Schlaghebels freigelassenen Bereich überdeckt. Es versteht sich, dass in Varianten der Abschluss von nur einem Wandabschnitt bereitgestellt sein kann, z.B. von einem Wandabschnitt am Schlaghebel oder am Sperrhebel alleine. Insbesondere können der oder die Wandabschnitte auch an anderen Komponenten der Schlagvorrichtung ausgebildet sein.

In einer bevorzugten Ausführungsform weist der Sperrhebel zwei Hebelarme auf, welche sich seitlich, innenseitig entlang Seitenwänden des Gehäuses von der Schwenkachse des Sperrhebels in Richtung zum Auslösehebel hin erstrecken. Analog dem Auslösehebel kann auf diese Weise trotz einer Lagerung zu beiden Seiten am Gehäuse ein Durchgang frei gehalten werden, sodass das Kleintier ungehindert zum Schlaghebel und damit in den Schlagbereich der Schlagvorrichtung vordringen kann.

In allenfalls zu bevorzugenden Varianten kann der Sperrhebel auch nur einen Hebelarm aufweisen. Allerdings ermöglicht eine Ausführung mit zwei Hebelarmen eine bessere (beidseitige) Lagerung des Hebels am Gehäuse.

An den schwenkachsenfernen Enden der Hebelarme des Sperrhebels ist jeweils eine Rastkante ausgebildet, mit welcher der Sperrhebel an entsprechenden Rastvorsprüngen des Auslösehebels lösbar verrastbar ist. Bevorzugt sind dabei die Rastvorsprünge an den Hebelarmen des Auslösehebels ausgebildet. Wird der Auslösehebel betätigt, d.h. durch das Betreten der Trittplattform durch ein Kleintier um seine Schwenkachse geschwenkt, kann der Eingriff der Rastkanten mit den Rastvorsprüngen gelöst werden, wodurch der Sperrhebel freigegeben ist und seinerseits wiederum den Schlaghebel freigeben kann.

Zur Arretierung des Schlaghebels in der Bereitschaftsstellung weist der Sperrhebel mit Vorteil eine Rastkerbe auf, in welcher der Schlaghebel, insbesondere die Schlagleiste des Schlaghebels, in der Bereitschaftsstellung verrastbar ist. Die Rastkerbe ist dabei bevorzugt in einem Bereich am Sperrhebel nahe seiner Schwenkachse ausgebildet. Falls der Sperrhebel wie oben beschrieben zwei Hebelarme aufweist, ist bevorzugt an jedem Hebelarm jeweils ein Rastkerbe ausgebildet.

Da die Rastkante des Sperrhebels zum Verrasten am Auslösehebel im Gegensatz dazu bevorzugt an den schwenkachsenfernen Längsenden der Hebelarme ausgebildet ist, wird aufgrund der so hergestellten Hebelverhältnisse erreicht, dass an der Rastkante des Sperrhebels nur eine kleine Federkraft anliegt, wenn der von einer vergleichsweise grossen Federkraft beaufschlagte Schlaghebel in der Rastkerbe des Sperrhebels arretiert ist.

Der Sperrhebel weist bevorzugt einen, mit Vorteil bezüglich der zugehörigen Schwenkachse den Hebelarmen weitgehend gegenüberliegend angeordneten, Wippenarm auf, welcher derart ausgerichtet ist, dass bei Erreichen der Bereitschaftsstellung der Sperrhebel durch den Schlaghebel über den Wippenarm derart verschwenkt wird, dass die Rastkerbe die Schlagleiste erfasst. Der Wippenarm ist bevorzugt derart angeordnet, dass die Schlagleiste des Schlaghebels bei Erreichen der Bereitschaftsstellung an den Anschlag stösst und so den Sperrhebel verschwenkt. Es versteht sich, dass auch andere, in der Regel allerdings konstruktiv aufwändigere, Mittel wie z.B. Anschläge oder Steuerkurven vorgesehen sein können, welche ein Verschwenken des Sperrhebels durch den Schlaghebel ermöglichen.

Bevorzugt ist ein Sperrfederelement vorhanden, mit welchem der Auslösehebel gegen den Sperrhebel beim Übergang von der Schlagstellung in die Bereitschaftsstellung vorspannbar ist. Das Sperrfederelement ist dabei vorzugsweise einstückig mit dem Sperrhebel, insbesondere als Federzunge, ausgebildet. Das Sperrfederelement erstreckt sich mit Vorteil weitgehend in Richtung der Hebelarme des Sperrhebels zum Auslösehebel hin. Insbesondere kann das Sperrfederelement beim Übergang von der Schlagstellung in die Bereitschaftsstellung derart auf den Auslösehebel wirken, dass dieser im Bereich seiner Rastkanten gegen die Rastkanten des Sperrhebels mit einer Federkraft beaufschlagt ist. Hierzu kann das Sperrfederelement bevorzugt mit den oben genannten Wippenarmen des Auslösehebels derart zusammenwirken, dass die Hebelarme aufgrund der Federkraft vom Boden weg angehoben und in Richtung zu den Hebelarmen des Sperrhebels geschwenkt werden. Dabei ist auch die Trittplattform des Auslösehebels, welche die Hebelarme verbindet, beim Übergang in die Bereitschaftsstellung vom Boden des Eingangsraums weg anhebbar. In der Schlagstellung sowie insbesondere auch in der Bereitschaftsstellung üben die Federzungen bevorzugt keine oder nur eine geringe Federkraft auf die Wippenarme aus, um zu verhindern, insbesondere bei einer Ausbildung aus Kunststoff, dass die Federkraft der Federzungen aufgrund von Formgedächtnis-Effekten oder plastischer Deformation des Federmaterials aufgrund konstanter Belastung mit der Zeit abnimmt.

Es versteht sich, dass bei sämtlichen Ausführungsformen der Innenraum der Schlagfalle bevorzugt an die jeweilige Anwendung derart an das Kleintier angepasst ist, dass das Kleintier weitgehend vollständig im Innenraum aufgenommen ist, wenn es die Schlagvorrichtung auslösen kann bzw. auslöst. Je nachdem ob die Falle z.B. für Ratten oder Mäuse vorgesehen ist, kann der Innenraum wie auch die Schlagvorrichtung entsprechend dimensioniert sein. Dabei ist es nicht unbedingt erforderlich, dass beispielsweise auch ein Schwanz des Kleintieres vollständig im Innenraum aufgenommen sein kann. Mit Vorteil ist der Eingangsbereich der Schlagfalle daher zumindest doppelt so lange, wie der Schlagbereich ausgebildet.

Besonders bevorzugt ist das Schlagfederelement als Schenkelfeder ausgebildet und bezüglich einer bodensenkrechten Längsmittelebene des Gehäuses, d.h. einer Ebene, welche senkrecht auf dem Gehäuseboden steht und die Längsachse umfasst, symmetrisch angeordnet. Die Schenkelfeder umfasst zwei über einen Bügel verbundene, in zugehörigen Aufnahmeräumen des Schlaghebels angeordnete Federwicklungen. Die Wicklungen sind dabei am Schlaghebel jeweils nahe einer Gehäuseseitenwand zu beiden Seiten am Schlaghebel angeordnet. Die Wicklungsachsen der Wicklungen sind dabei koaxial zur Schwenkachse des Schlaghebels angeordnet. Mit besonderem Vorteil sind die Wicklungen in den Aufnahmeräumen derart aussenseitig von Wänden der Aufnahmeräume zumindest teilweise umfasst, dass eine achslose Halterung der Wicklungen gewährleistet ist. Mit einer achslosen Halterung ist hierbei eine Halterung bezeichnet, bei welcher die Wicklung nicht auf einen Achsstutzen oder eine Achse aufgesetzt ist. Der Bügel die Wicklungen verbindende Bügel ist am Schlaghebel abgestützt, während jeweils ein von jeder der Wicklungen ausgehender Schenkel der Schenkelfeder am Gehäuse abgestützt ist. Die Schenkelfeder ermöglicht somit eine gleichmässige und konstruktiv einfache Federbeaufschlagung des Schlaghebels bezüglich seiner Schwenkachse gegenüber dem Gehäuse.

Weitere Einzelmerkmale und Vorteile der Erfindung ergeben sich aus der nachfolgenden Beschreibung der Ausführungsbeispiele und den zugehörigen Zeichnungen. Es zeigen schematisch:
- Figur 1: eine äussere Schrägansicht einer erfindungsgemässen Schlagfalle in der Schlagstellung;
- Figur 2: eine äussere Schrägansicht der Schlagfalle gemäss Fig. 1 in der Bereitschaftsstellung;
- Figur 3: eine Seitenriss der Schlagvorrichtung der Schlagfalle in der Stellung gemäss Fig. 1;
- Figur 4: eine äussere Schrägansicht der Schlagvorrichtung der Schlagfalle in der Stellung gemäss Fig. 3;
- Figur 5: eine Seitenriss der Schlagvorrichtung der Schlagfalle in der Stellung gemäss Fig. 2;
- Figur 6: eine äussere Schrägansicht der Schlagvorrichtung der Schlagfalle in der Stellung gemäss Fig. 5;
- Figur 7: ein Längsschnitt durch die Schlagfalle gemäss Fig. 1 im Bereich der Schlagvorrichtung.

Grundsätzlich sind in den Figuren gleiche Elemente mit gleichen Bezugszeichen versehen.

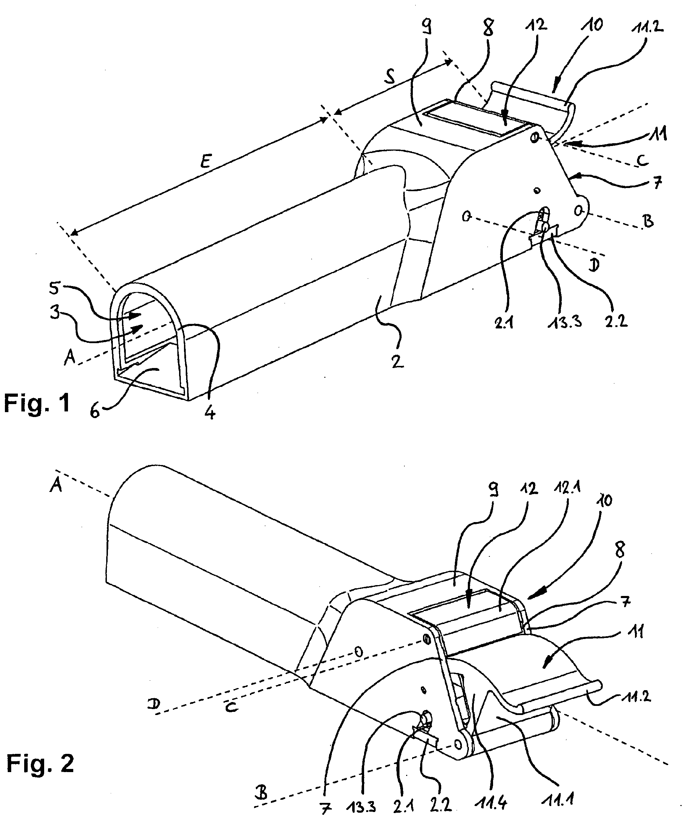

Figur 1 zeigt eine erfindungsgemässe Schlagfalle 1 in einer Schrägansicht von aussen in Richtung auf eine Eingangsöffnung 3 in einem Gehäuse 2.

Das Gehäuse 2 weist einen rohrförmig ausgebildeten Eingangsabschnitt E auf, an welchem an einer im Folgenden mit "Vorderseite" bzw. "vorne" bezeichneten Stirnseite 4 die Eingangsöffnung 3 ausgebildet ist. In einer Längsrichtung A des rohrförmigen Eingangsabschnitts E schliesst ein Schlagabschnitt S des Gehäuses 2 an, in welchem eine Schlagvorrichtung 10 angeordnet ist.

Der Eingangsabschnitt E und der Schlagabschnitt S sind vorliegend als einstückiges Gehäuse 2 ausgebildet. Ausgehend von der Eingangsöffnung 3 erstreckt sich in Längsrichtung (A) ein durchgehender Innenraum 5 des Gehäuses 2. Im Eingangsabschnitt E ist der Innenraum 5 tunnelförmig ausgebildet, während der Innenraum 5 im Schlagabschnitt S einen im Wesentlichen rechteckigen Querschnitt aufweist. Über seine gesamte Länge weist das Gehäuse 2 einen im Wesentlichen ebenen Boden 6 auf. Im Folgenden wird eine Richtung in weitgehend senkrechter Richtung zum Boden 6 hin mit "unten" bezeichnet, während entsprechend eine entgegen gesetzte Richtung vom Boden 6 weg mit "oben" bezeichnet ist.

An einem der vorderen Stirnseite 4 gegenüberliegenden Längsende des Gehäuses 2, welches im Folgenden mit "hinteres" Längsende bezeichnet ist, weist das Gehäuse 2 eine bezüglich des Bodens 6 schräg nach vorne geneigte Stirnseite 7 auf. An der Stirnseite 7 ist eine weitgehend rechteckige Öffnung 8 des Innenraums 5 ausgebildet, welche sich vorliegend im Schlagabschnitt S auf einer Oberseite 9 des Gehäuses 2 fortsetzt.

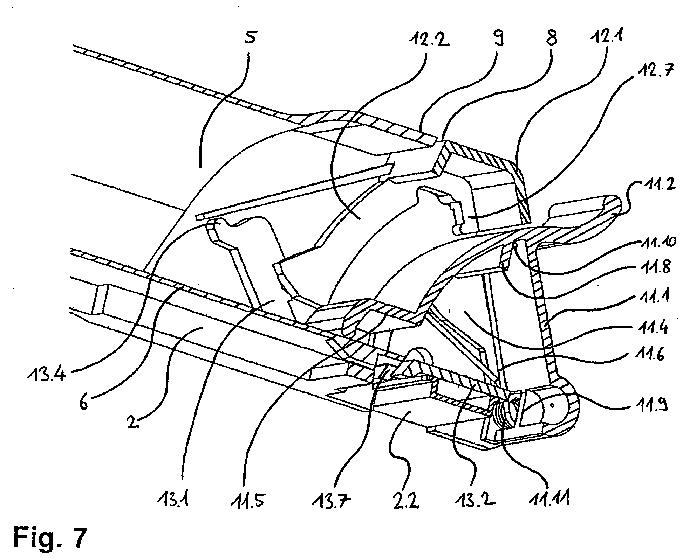

Die Schlagvorrichtung 10 befindet sich in der Darstellung der Fig. 1 in einer Schlagstellung. In dieser Stellung ist ein endseitig bei der Stirnfläche 7 in Bodennähe um eine Querachse B am Gehäuse 2 schwenkbar gelagerter Schlaghebel 11 in den Innenraum 5 eingeschwenkt. Der Schlaghebel 11 ist derart ausgebildet, dass er mit einem Wandabschnitt 11.1 die Öffnung 8 über deren gesamte Breite wenigstens teilweise verschliesst (siehe hierzu z.B. auch Fig. 7). Der Wandabschnitt 11.1 ist dabei weitgehend koplanar zur Stirnfläche 7 in der Öffnung 8 angeordnet und schliesst bündig mit einem angrenzenden Rand der Öffnung 8 ab.

Ein Sperrhebel 12 ist nahe der Oberseite 9 bei der Stirnfläche 7 um eine Schwenkachse C schwenkbar am Gehäuse 2 gelagert. Der Sperrhebel 12 weist dabei einen im Bereich seiner Schwenkachse C ausgebildeten Wandabschnitt 12.1 auf, welcher einen vom Schlaghebel 11 freigelassenen Bereich der Öffnung 8 über deren gesamte Breite verschliesst. Der Wandabschnitt 12.1 schliesst weitgehend bündig mit einem angrenzenden Randabschnitt der Öffnung 8 sowie mit dem Wandabschnitt 11.1 des Schlaghebels 11 ab. Der Wandabschnitt 12.1 weist dabei eine in Querrichtung ausgerichteten Kante auf, sodass ein durch die Kante definierter erster Bereich des Wandabschnitts 12.1 die Öffnung 8 an der Oberseite 9 verschliesst und der andere durch die Kante definierte Bereich den vom Wandabschnitt 11.1 freigelassenen Öffnungsbereich der Öffnung 8 auf der Stirnseite 7. Die Schwenkachse C des Sperrhebels ist dabei unmittelbar am Wandabschnitt, parallel zur Kante angeordnet. Schlaghebel 11 und Sperrhebel 12 verschliessen in der Schlagstellung somit zusammen die Öffnung 8 und bilden gemeinsam einen vollständigen endseitigen Abschluss des Innenraums 5.

An einem achsfernen Bereich des Wandabschnitts 11.1, weist der Schlaghebel 11 einen Betätigungsausleger 11.2 auf, welcher vom Wandabschnitt 11.1 in weitgehend senkrechter Richtung aussenseitig absteht. Über den Betätigungsausleger 11.2 kann der Schlaghebel 11 auf einfache Weise um seine Schwenkachse B von einem Benutzer verschwenkt werden.

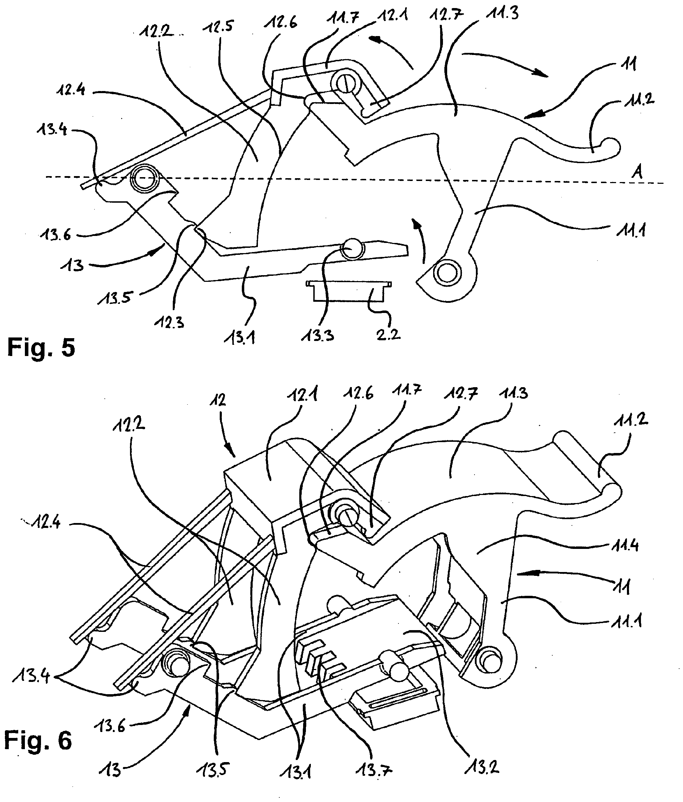

Figur 2 zeigt die erfindungsgemässe Schlagfalle 1 in einer Schrägansicht von aussen in Richtung auf die hintere Stirnseite 7 in einer Bereitschaftsstellung. In dieser Stellung ist der Schlaghebel 11 um seine Schwenkachse B nach hinten um einen vorgegebenen Winkel ausgeschwenkt und in dieser Position arretiert (siehe hierzu auch Fig. 5 und 6). In der ausgeschwenkten Stellung ist von aussen eine Schlagplatte 11.3 des Schlaghebels 11 erkennbar, welche sich in den Innenraum 5 erstreckt und in einem achsfernen Bereich weitgehend senkrecht zum Wandabschnitt 11.1 an den Wandabschnitt 11.1 anschliesst.

Die Schlagplatte 11.3 ist gekrümmt, als Teilfläche einer Mantelfläche eines gedachten mit der Schwenkachse C koaxial angeordneten, Kreiszylinders ausgebildet. Damit kann der Schlaghebel 11 aus dem vom Wandabschnitt 12.1 des Sperrhebels 12 freigelassenen Bereich der Öffnung 8 ausgeschwenkt werden, ohne dass sich ein bezüglich C radialer Abstand der Schlagplatte 11.3 vom Wandabschnitt 12.1 ändert. Damit ist auch beim Ausschwenken des Schlaghebels 11 ein weitgehend vollständiger Verschluss der Öffnung 8 gewährleistet. Zwischen Schlagplatte 11.3 und Wandabschnitt 11.1 sind zudem Seitenwände 11.4 ausgebildet, sodass auch bei ausgeschwenktem Schlaghebel 11 ein durch den ausgeschwenkten Schlaghebel 11 geschaffenen seitlichen Zugang zur Öffnung 8 weitgehend abgeschlossen ist.

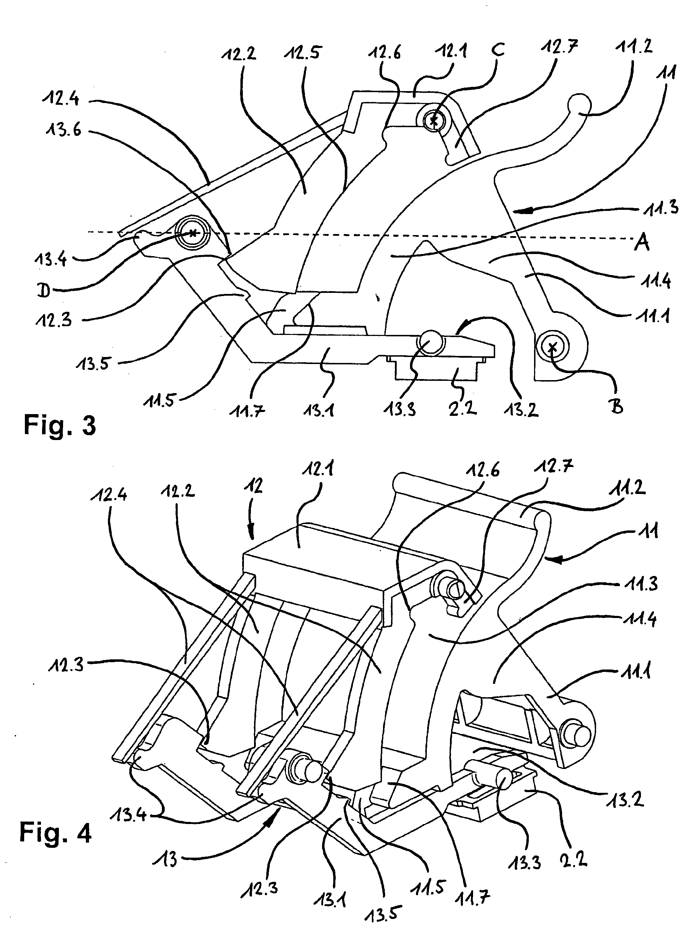

Die Funktion der Schlagvorrichtung 1 ist im Folgenden anhand der Fig. 3 bis 6 näher beschrieben.

Figur 3 zeigt die Schlagvorrichtung 10 in der Schlagstellung in einem Seitenriss, wobei der besseren Übersichtlichkeit halber auf eine Darstellung des Gehäuses 2 verzichtet wurde. Figur 4 zeigt eine äussere Schrägansicht der Schlagvorrichtung 10 in derselben Stellung. Im Folgenden sind die Fig. 3 und 4 gemeinsam beschrieben.

Der Schlaghebel 11 ist um seine Schwenkachse B vollständig nach vorne verschwenkt, sodass die Schlagplatte 11.3 mit einer Schlagleiste 11.5 auf zwei Hebelarmen 13.1 (siehe auch Fig. 5) eines Auslösehebels 13 abgesenkt ist. Der Auslösehebel 13 ist dabei in Längsrichtung A vor dem Schlaghebel 11 um eine quer zur Längsrichtung A angeordnete Schwenkachse D schwenkbar am Gehäuse 2 gelagert. Ausgehend von der Schwenkachse D erstrecken sich die Hebelarme 13.1 in Richtung zum Schlaghebel 11 nach hinten und enden in einem Bereich hinter der Schlagleiste 11.5. Der Auslösehebel 13 weist zudem kurze Wippenarme 13.4 auf, welche den Hebelarmen 13.1 bezüglich der Schwenkachse D wippenartig, weitgehend gegenüberliegend, angeordnet sind. Jeweils einer der Hebelarme 13.1 ist dabei nahe einer Innenseite einer Seitenwand des Gehäuses 2 angeordnet, sodass der Innenraum 5 in einem mittleren Bereich im Wesentlichen ungehindert durchgängig ist.

An freien Längsenden sind die Hebelarme 13.1 über ein Trittplattform 13.2 miteinander verbunden, welche sich quer durch den Innenraum 5 erstreckt (siehe z.B. Fig. 4 und 6). Im Bereich der Trittplattform 13.2 sind zu beiden Seiten aussenseitige Führungsnocken 13.3 an den Hebelarmen 13.1 ausgebildet, welche in kurvenförmige Führungsnuten 2.1 des Gehäuses 2 eingreifen. Die Führungsnuten 2.1 führen zum einen die Schwenkbewegung des Auslösehebels 13 und begrenzen gleichzeitig seinen Schwenkbereich.

Unterhalb der Trittplattform 13.2 ist ein Träger 2.2 für einen Köder dargestellt. Der Träger 2.2 ist wannenförmig zur Aufnahme des Köders ausgebildet und nach oben offen. In der Schlagstellung ist die Trittplattform 13.2 auf den Träger 2.2 abgesenkt und verschliesst diesen. Der Träger 2.2 ist bevorzugt in Querrichtung in eine entsprechende Ausnehmung im Gehäuse 2, bevorzugt im Boden 6, einschiebbar ausgebildet, sodass der Köder auf einfache Weise z.B. erneuert werden kann. Indem der von einer Feder 11.6 beaufschlagte Schlaghebel 11 in der Schlagstellung auf den Hebelarmen 13.1 aufliegt und diese gegen den Träger 2.2 zwingt, sind der Auslösehebel 13 sowie die Trittplattform 13.2 in der Schlagstellung vollständig festgelegt.

Der Sperrhebel 12 weist ebenfalls zwei Hebelarme 12.2 auf, welche sich nahe einer Innenseite der Seitenwand des Gehäuses 2 ausgehend von der Schwenkachse C zum Auslösehebel 13 hin erstrecken. Die Hebelarme 13.1 des Auslösehebels 13 sowie die Hebelarme 12.2 des Sperrhebels 12 sind dabei in derselben, weitgehend parallel zur Seitenwand des Gehäuses 2 ausgerichteten Längsebene angeordnet. Schlaghebelseitig weisen die Hebelarme 12.2 ein konkav kreisförmiges Profil 12.5 auf, welches ein freies Verschwenken des Schlaghebels 11 ermöglicht, ohne dass der Sperrhebel 12 aus seiner in der Schlagstellung eingenommenen Position verschwenkt werden muss. An einem schwenkachsenseitigen Ende des Profils 12.5 geht dieses in eine Rastkerbe 12.6 über, welche zur Verrastung der Schlagleiste 11.5 in der Bereitschaftsstellung vorgesehen ist. Im Bereich der Schwenkachse C ist ein bezüglich der Hebelarme 12.2 wippenartig, weitgehend gegenüberliegender, Wippenarm 12.7 ausgebildet, an welchen die Schlagleiste 11.5 bei Erreichen der Bereitschaftsstellung anstösst und den Sperrhebel 12 mit seinen Hebelarmen 12.2 zum Arretieren nach hinten verschwenkt (siehe Fig. 4). Vorliegend ist der Wippenarm 12.7 von einem Abschnitt des Wandabschnitts 12.1 gebildet.

Von einem Bereich des Sperrhebels 12 bei der Schwenkachse C erstrecken sich oberhalb der Hebelarme 12.2 starr mit dem Sperrhebel 12 verbundene Federzungen 12.4 hin zu den Wippenarmen 13.4 des Auslösehebels 13. Die Federzungen 12.4 sind dabei knapp oberhalb der Wippenarme 13.4 in derselben Längsebene wie die Hebelarme 12.2 und 13.1 angeordnet und üben in der Schlagstellung keine oder nur eine geringe Federkraft auf die Wippenarme 13.4 aus.

An den Hebelarmen 13.1 des Auslösehebels 13 sind sperrhebelseitig Rastvorsprünge 13.5 ausgebildet, an welchen endseitig an den Hebelarmen 12.2 ausgebildete Rastkanten 12.3 des Sperrhebels 12 verrastbar sind. In der Schlagstellung liegen die Rastkanten 12.3 des Sperrhebels 12 an einem Rastanschlag 13.6 der Hebelarme 13.1 an, welcher näher bei der Schwenkachse D ausgebildet ist, als die Rastvorsprünge 13.5. Der Sperrhebel 12 ist somit über die Federzungen 12.4 und dem Rastanschlag 13.6 in der Schlagstellung federnd am Auslösehebel 13 festgelegt, wobei seine Rastkanten 12.3 in einem Längsbereich vor den Rastvorsprüngen 13.5 angeordnet sind.

Figur 5 zeigt die Schlagvorrichtung 10 in der Bereitschaftsstellung, in welcher der Schlaghebel 11 gespannt und vom Auslösehebel 13 über den Sperrhebel 12 arretiert ist. Figur 6 zeigt eine äussere Schrägansicht der Schlagvorrichtung 1 in derselben Stellung. Im Folgenden sind die Fig. 5 und 6 gemeinsam beschrieben.

Um die Schlagvorrichtung 10 aus der Schlagstellung in die Bereitschaftsstellung zu bringen, wird der Schlaghebel 11 von einem Benutzer beispielsweise über den Betätigungsausleger 11.2 mit einer Stellkraft beaufschlagt und aus dem Innenraum 5 nach hinten ausgeschwenkt (siehe Pfeil, Fig. 5). Der Schlaghebel 11 ist dabei entgegen der Ausschwenkbewegung von einer Schenkelfeder 11.6 mit einer Federkraft zum Innenraum 5 hin beaufschlagt (siehe Fig. 7).

Beim Ausschwenken des Schlaghebels 11 nach hinten bleiben Sperrhebel 12 und Auslösehebel 13 bis kurz vor Erreichen der Bereitschaftsstellung im Wesentlichen in Ruhe d.h. haben im Wesentlichen dieselbe Stellung, wie in der Schlagstellung. Stösst die Schlagleiste 11.5 von unten her an den Wippenarm 12.7, wird der Sperrhebel 12 mit seinen Hebelarmen 12.2 nach hinten verschwenkt. Dabei gelangt die Schlagleiste 11.5 mit entsprechend ausgebildeten Rastbereichen 11.7 in die Rastkerbe 12.6 des Sperrhebels 12. Zudem üben die mit den Hebelarmen 12.2 nach unten verschwenkten Federzungen 12.4 eine Kraft von oben her auf die Wippenarme 13.4 des Auslösehebels 13 aus, sodass dessen Hebelarme 13.1 nach Art einer Wippe um die Schwenkachse D nach oben verschwenkt werden. Zum einen wird dabei die Trittplattform 13.2 vom Träger 2.2 abgehoben und gibt den Köder frei. Zum anderen gelangen die Rastkanten 12.3 des Sperrhebels 12 hinter die Rastvorsprünge 13.5 des Auslösehebels 13. Aufgrund der Federkraft der Federzungen 12.4 auf den Auslösehebel 13 werden dabei die Rastvorsprünge 13.5 in eine Position vor die Rastkanten 12.3 des Sperrhebels 12 angehoben. Ein Verschwenken des Auslösehebels 13 mit seinen Hebelarmen 13.1 nach oben, d.h. vom Boden 6 weg, ist dabei durch den Eingriff der Führungsnocken 13.3 in die Führungsnuten 2.1 des Gehäuses 2 begrenzt.

Wird der Schlaghebel 11 von der vom Benutzer aufgewendeten Stellkraft entlastet, zwingt die Federkraft der Feder 11.6 den Schlaghebel 11 in Richtung zum Innenraum 5 hin. Dabei wird der Sperrhebel 12 über die Rastkerbe 12.6 vom Schlaghebel 11 mit einer Kraft beaufschlagt, welche die Hebelarme 12.2 nach vorne und mit ihren endseitigen Rastkanten 12.3 gegen die Rastvorsprünge 13.5 zwingt. Sperrhebel 12 und Schlaghebel 11 sind somit über die Verrastung am Auslösehebel 13 festgelegt. Damit ergibt sich ein statisch durch die Feder 11.6 vorgespanntes Hebelsystem aus Schlaghebel 11, Sperrhebel 12 und Auslösehebel 13.

Gelangt nun ein Kleintier in die Schlagfalle 1 und betritt die Trittplattform 13.2, wird der Auslösehebel 13 mit seinen Hebelarmen 13.1 nach unten verschwenkt. Damit wird der Eingriff der Rastkante 12.3 und der Rastvorsprünge 13.5 gelöst, wodurch der Sperrhebel 12 mit seinen Hebelarmen 12.2 nach vorne ausschwenken kann. Dabei gleitet die Schlagleiste 11.5 aus der Rastkerbe 12.6 und kann frei von der Federkraft der Feder 11.6 beschleunigt einen Schlag auf das Kleintier ausüben. Sofern kein Kleintier in der Falle ist, wird die Schlagbewegung des Schlaghebels 11 durch einen Aufprall der Schlagleiste 11.5 auf die Hebelarme 13.1 des Auslösehebels 13 gestoppt. Die Hebelarme 13.1 werden dabei zum Boden 6 hin nach unten gedrückt, wobei die Trittplattform 13.2 wieder auf den Träger 2.2 abgesenkt wird und diesen verschliesst.

Figur 7 zeigt einen Längsschnitt in einer Längsebene durch die Schlagfalle 1 in der Schlagstellung im Bereich der Schlagvorrichtung 10.

Dabei ist insbesondere die Anordnung jeweils eines der Hebelarme 12.2 und 13.2 sowie einer der Federzungen 12.4 in einer gemeinsamen Längsebene nahe der Seitenwand im Schlagbereich S des Gehäuses 2. Aus der Fig. 7 wird unmittelbar klar, dass diese Komponenten den Innenraum 5 kaum obstruieren, sodass dieser für das Kleintier bis zum Schlaghebel 11 weitgehend frei durchgängig ist.

Ebenso ist erkennbar, dass die Schenkelfeder 11.6 mit einem ihrer Schenkel in einer Ausnehmung am Gehäuse 2 abgestützt ist. Ein als Bügel 11.10 ausgebildeter weiterer Schenkel ist an einem innenseitig an der Schlagplatte 11.3 angeordneten Stützsteg 11.8 abgestützt. Eine Wicklung 11.11 der Schenkelfeder 11.6 ist dabei weitgehend koaxial mit der Schwenkachse B in einem Aufnahmeraum 11.9 des Schlaghebels 11 angeordnet. Im Aufnahmeraum 11.9 ist die Wicklung 11.11 teilweise derart von aussen umfasst, dass eine achslose Halterung der Feder 11.6 ohne Achsstutzen gewährleistet ist. Der Bügel 11.10 erstreckt sich dabei von einer Gehäuseseite zur anderen zu einer weiteren, nicht dargestellten Wicklung, sodass jeweils eine Wicklung bei einer Seitenwand des Gehäuses 2 in jeweils einem Aufnahmeraum des Schlaghebels 11 angeordnet ist. Ein von der weiteren Wicklung ausgehender weiterer Schenkel (nicht dargestellt) ist an der gegenüberliegenden Gehäusewand abgestützt. Bezüglich der Ebene B ist die Schenkelfeder 11.6 spiegelsymmetrisch ausgebildet.

Ebenfalls erkennbar ist der erfindungsgemässe Verschluss der Öffnung 8 durch die Wandabschnitte 11.1 und 12.1 des Schlaghebels 11 respektive des Sperrhebels 12. Wie ebenso aus Fig.7 ersichtlich ist, ist der Boden 6 derart im Gehäuse 2 ausgebildet, dass die Trittplattform 13.2 des Auslösehebels 13 in abgesenktem Zustand weitgehend bündig mit dem Boden 6 abschliesst. Dies hat den Vorteil, dass in der Bereitschaftsstellung die Trittplattform 13.2 nur geringfügig über den Boden 6 übersteht. Der Träger 2.2 ist dabei etwas unterhalb einer Bodenebene angeordnet und in einer entsprechenden Führung von der Seite her in das Gehäuse 2 eingeschoben. Die Trittplattform 13.2 weist zudem Lüftungsschlitze 13.7 auf, welche eine bessere Verbreitung eines vom Köder verströmten Lockduftstoffes in den Innenraum 5 sicherstellt.

## Patentansprüche

1. Schlagfalle (1) für Kleintiere wie Mäuse oder Ratten mit einer Schlagvorrichtung (10), welche in eine Schlagstellung und eine Bereitschaftsstellung bringbar ist, umfassend ein Gehäuse (2) mit einem Boden (6) und einem länglichen, an beiden Längsenden offenen Innenraum (5), an dessen einem Längsende eine Eingangsöffnung (3) zu einem Eingangsabschnitt (E) des Gehäuses (2) und an dessen anderem Längsende in einem Schlagbereich (S) des Gehäuses (2) die Schlagvorrichtung (10) angeordnet ist, wobei die Schlagvorrichtung (10) einen Schlaghebel (11) und einen Auslösehebel (13) umfasst, und der Schlaghebel (11) bei einem Übergang von der Schlagstellung in die Bereitschaftsstellung gegen die Federkraft eines Schlagfederelements (11.6) vorspannbar ist, wobei der Schlaghebel (11) in der Bereitschaftsstellung durch den Auslösehebel (13) direkt oder indirekt lösbar arretierbar ist und der Auslösehebel (13) derart angeordnet ist, dass die Arretierung des Schlaghebels (11) durch ein im Innenraum (5) vorhandenes Kleintier über den Auslösehebel (13) lösbar ist,
**dadurch gekennzeichnet, dass**
die Schlagvorrichtung (10) zum vollständigen Verschluss einer endseitigen Öffnung (8) des Innenraums (5) im Schlagbereich (S) des Gehäuses (2) ausgebildet ist, wenn die Schlagvorrichtung in der Schlagstellung ist, wobei die Schlagvorrichtung (10) einen oder mehrere Wandabschnitte (11.1, 12.1) aufweist, welche in der Schlagstellung die endseitige Öffnung (8) des Innenraums (5) verschließen, wobei der oder die Wandabschnitte (11.1, 12.1) in der Schlagstellung in und/oder auf der endseitige Öffnung (8) des Innenraums (5) angeordnet ist bzw. sind, wobei am Schlaghebel (11) ein Wandabschnitt (11.1) ausgebildet ist.

2. Schlagfalle (1) gemäß Anspruch 1,
**dadurch gekennzeichnet, dass**
der Schlaghebel (11) um eine quer zur Längsrichtung (A) und parallel zum Boden (6) des Gehäuses (2) angeordnete geometrische Schwenkachse (B) schwenkbar am Gehäuse (2) gelagert ist, wobei die Schwenkachse (B) in einem bodennahen Bereich am eingangsöffnungsfernen Längsende des Innenraums (5) angeordnet ist.

3. Schlagfalle gemäß Anspruch 2,
**dadurch gekennzeichnet, dass**
der Schlaghebel (11) eine Schlagplatte (11.3) mit einer Schlagleiste (11.5) aufweist, welche in den Innenraum (5) hineinragt und in einem schwenkachsenfernen Bereich im Wesentlichen in senkrechter Richtung am Schlaghebel (11) ansetzt.

4. Schlagfalle gemäß einem der Ansprüche 2 oder 3,
**dadurch gekennzeichnet, dass**
der Schlaghebel (11) einen Betätigungsausleger (11.2) aufweist, mit welchem der Schlaghebel (11) von außen nach Art eines Spannhahns gegen die Kraft des Schlagfederelements (11.6) vom Innenraum (5) weg nach außen schwenkbar ist, um die Schlagvorrichtung aus der Schlagstellung in die Bereitschaftsstellung zu bringen.

5. Schlagfalle (1) gemäß einem der Ansprüche 1 bis 4,
**dadurch gekennzeichnet, dass**
der Auslösehebel um eine quer zur Längsrichtung (A) und parallel zum Boden (6) des Gehäuses (2) angeordnete geometrische Schwenkachse (D) schwenkbar am Gehäuse (2) gelagert ist.

6. Schlagfalle (1) gemäß Anspruch 5,
**dadurch gekennzeichnet, dass**
der Auslösehebel (13) zwei Hebelarme (13.1) aufweist, welche sich seitlich, innenseitig entlang Seitenwänden des Gehäuses (2) von der Schwenkachse (D) des Auslösehebels (13) weg erstrecken.

7. Schlagfalle (1) gemäß Anspruch 6,
**dadurch gekennzeichnet, dass**
an schwenkachsenfernen Enden der Hebelarme (13.1) des Auslösehebels (13) eine Trittplattform (13.2) ausgebildet ist, welche sich nahe dem Boden (6) quer durch den Innenraum (5) erstreckt.

8. Schlagfalle (1) gemäß Anspruch 7,
**dadurch gekennzeichnet, dass**
der Auslösehebel (13) im Bereich der Trittplattform (13.2) bei einem Verschwenken um seine Schwenkachse (D) über seitlich angeordnete Führungsnocken (13.3) in einer Kurvenführung (2.1) am Gehäuse (2) geführt ist.

9. Schlagfalle (1) gemäß einem der Ansprüche 1 bis 8,
**dadurch gekennzeichnet, dass**
die Schlagvorrichtung (10) einen Sperrhebel (12) umfasst, welcher in der Bereitschaftsstellung lösbar am Auslösehebel (13) arretierbar ist und an welchem der Schlaghebel (11) in der Bereitschaftsstellung lösbar arretierbar ist.

10. Schlagfalle (1) gemäß Anspruch 9,
**dadurch gekennzeichnet, dass**
der Sperrhebel (12) um eine quer zur Längsrichtung (A) des Gehäuses (2) und parallel zum Boden (6) angeordnete geometrische Schwenkachse (C) schwenkbar am Gehäuse (2) gelagert ist.

11. Schlagfalle (1) gemäß einem der Ansprüche 9 oder 10,
**dadurch gekennzeichnet, dass**
am Schlaghebel (11) sowie am Sperrhebel (12) jeweils ein Wandabschnitt (11.1, 12.1) ausgebildet ist, welche Wandabschnitte (11.1, 12.1) in der Schlagstellung gemeinsam einen, bevorzugt vollständigen, endseitigen Abschluss des Innenraums (5) bilden.

12. Schlagfalle (1) gemäß Anspruch 11,
**dadurch gekennzeichnet, dass**
der Sperrhebel (12) zwei Hebelarme (12.2) aufweist, welche sich seitlich, innenseitig entlang Seitenwänden des Gehäuses (2) von der Schwenkachse (C) des Sperrhebels (12) in Richtung zum Auslösehebel (13) hin erstrecken, wobei an den schwenkachsenfernen Enden der Hebelarme (12.2) des Sperrhebels (12) jeweils eine Rastkante (12.3) ausgebildet ist, mit welcher der Sperrhebel (12) an entsprechenden Rastvorsprüngen (13.5) des Auslösehebels (13), welche an den Hebelarmen (13.1) des Auslösehebels (13) ausgebildet sind, lösbar verrastbar ist.

13. Schlagfalle (1) gemäß einem der Ansprüche 9 bis 12,
**dadurch gekennzeichnet, dass**
der Sperrhebel (12) eine Rastkerbe (12.6) aufweist, in welche die Schlagleiste (11.5) des Schlaghebels (11), in der Bereitschaftsstellung verrastbar ist.

14. Schlagfalle (1) gemäß Anspruch 13,
**dadurch gekennzeichnet, dass**
der Sperrhebel (12) einen bezüglich der zugehörigen Schwenkachse (C) den Hebelarmen (12.2) weitgehend gegenüberliegend angeordneten, Wippenarm (12.7) aufweist, welcher derart angeordnet ist, dass bei Erreichen der Bereitschaftsstellung der Sperrhebel (12) durch den Schlaghebel (11) über den Wippenarm (12.7) derart verschwenkt wird, dass die Rastkerbe (12.6) die Schlagleiste (11.5) erfasst.

15. Schlagfalle (1) gemäß einem der Ansprüche 9 bis 14,
**dadurch gekennzeichnet, dass**
ein Sperrfederelement (12.4) vorhanden ist, mit welchem der Auslösehebel (13) gegen den Sperrhebel (12) beim Übergang von der Schlagstellung in die Bereitschaftsstellung vorspannbar ist, wobei das Sperrfederelement (12.4) einstückig mit dem Sperrhebel (12) ausgebildet ist und derart auf den Auslösehebel (13) wirkt, dass dieser im Bereich seiner Rastvorsprünge (13.5) gegen die Rastkanten (12.3) des Sperrhebels (12) mit einer Federkraft beaufschlagbar ist.

16. Schlagfalle (1) gemäß einem der Ansprüche 1 bis 15,
**dadurch gekennzeichnet, dass**
der Eingangsbereich (E) wenigstens doppelt so lange ist, wie der Schlagbereich (S).

17. Schlagfalle (1) gemäß einem der Ansprüche 1 bis 16,
**dadurch gekennzeichnet, dass**
das Schlagfederelement (11.6) als Schenkelfeder (11.6) und, bezüglich einer bodensenkrechten Längsmittelebene des Gehäuses (2), symmetrisch ausgebildet ist, wobei die Schenkelfeder (11.6) zwei über einen Bügel (11.10) verbundene, in zugehörigen Aufnahmeräumen (11.9) des Schlaghebels (11) angeordnete Wicklungen (11.11) aufweist, welche mit einer Wicklungsachse koaxial zur Schwenkachse (B) des Schlaghebels (11) angeordnet sind und derart außenseitig von Wänden der Aufnahmeräume (11.9) zumindest teilweise umfasst sind, dass eine achslose Halterung der Wicklungen (11.11) gewährleistet ist, wobei der Bügel (11.10) am Schlaghebel (11) abgestützt ist.

## Claims

1. Snap trap (1) for small animals, such as mice or rats, having a striking device (10) which can be brought into a striking position and a standby position, comprising a housing (2) with a floor (6) and an elongate interior (5), which is open at the two longitudinal ends, at one longitudinal end of which an entry opening (3) to an entry section (E) of the housing, and at the other longitudinal end of which, in a striking region (S) of the housing (2), the striking device (10) is arranged, wherein the striking device (10) comprises a striking lever (11) and a triggering lever (13), and the striking lever (11) can be pre-tensioned counter to the spring force of a striking-spring element (11.6) as it transfers from the striking position into the standby position, wherein the striking lever (11) can be arrested in the standby position to be released directly or indirectly by the triggering lever (13), and the triggering lever (13) is arranged such that the arresting of the striking lever (11) can be released via the triggering lever (12) by a small animal being present in the interior (5),
**characterized in that**
the striking device (10) is designed for completely closing an end-side opening (8) of the interior (5) in the striking region (S) of the housing (2) when the striking device is in the striking position, wherein the striking device (10) has one or more wall portions (11.1, 12.1) which, in the striking position, close the end-side opening (8) of the interior (5), wherein the wall portion or portions (11.2, 12.1), in the striking position, is or are arranged in and/or on the end-side opening (8) of the interior (5), wherein a wall portion (11.1) is formed on the striking lever (11).

2. Snap trap (1) according to claim 1,
**characterized in that**
the striking lever (11) is mounted to be pivotable on the housing (2) about a geometrical pivoting axis (B) arranged transversely to the longitudinal direction (A) and parallel to the floor (6) of the housing (2), wherein the pivoting axis (B), in a region in the vicinity of the floor, is arranged at that longitudinal end of the interior (5) which is remote from the entry opening.

3. Snap trap (1) according to claim 2,
**characterized in that**
the striking lever (11) has a striking plate (11.3) with a striking bar (11.5) which projects into the interior (5) and, in a region which is remote from the pivoting axis, adjoins the striking lever (11) essentially in the perpendicular direction.

4. Snap trap (1) according to claim 2 or 3,
**characterized in that**
the striking lever (11) has an actuating extension arm (11.2) by means of which the striking lever (11) can be pivoted outward away from the interior (5) counter to the force of the striking-spring element (11.6), from the outside in the manner of a trigger, in order to bring the striking device out of the striking position into the standby position.

5. Snap trap (1) according to anyone of claims 1 to 4,
**characterized in that**
the triggering lever is mounted to be pivotable on the housing (2) about a geometrical pivoting axis (D) arranged transversely to the longitudinal direction (A) and parallel to the floor (6) of the housing (2).

6. Snap trap (1) according to claim 5,
**characterized in that**
the triggering lever (13) has two lever arms (13.1) which extend laterally, internally along side walls of the housing (2), away from the pivoting axis (D) of the triggering lever (13).

7. Snap trap (1) according to claim 6,
**characterized in that**
those ends of the lever arms (13.1) of the triggering lever (13) which are remote from the pivoting axis have formed on them a treading platform (13.2) which extends transversely through the interior (5), in the vicinity of the floor (6).

8. Snap trap (1) according to claim 7,
**characterized in that**
in the region of the treading platform (13.2), the triggering lever (13), when pivoted about its pivoting axis (D), is guided in a curved guide (2.1) on the housing (2) via laterally arranged guiding cams (13.3).

9. Snap trap (1) according to anyone of claims 1 to 8,
**characterized in that**
the striking device (10) comprises a blocking lever (12) which, in the standby position, can be arrested in a releasable manner on the triggering lever (13), and on which the striking lever (11) can be arrested in a releasable manner in the standby position.

10. Snap trap (1) according to claim 9,
**characterized in that**
the blocking lever (12) is mounted to be pivotable on the housing (2) about a geometrical pivoting axis (C) arranged transversely to the longitudinal direction (A) of the housing (2) and parallel to the floor (6).

11. Snap trap (1) according to anyone of claims 9 or 10,
**characterized in that**
a wall portion (11.1, 12.1) is in each case formed on the striking lever (11) and on the blocking lever (12), which wall portions (11.1, 12.1), in the striking position, together form a preferably complete end-side terminating means for the interior (5).

12. Snap trap (1) according to claim 11,
**characterized in that**
the blocking lever (12) has two lever arms (12.2) which extend laterally, internally along side walls of the housing (2), from the pivoting axis (C) of the blocking lever (12) in the direction of the triggering lever (13), wherein those ends of the lever arms (12.2) of the blocking lever (12) which are remote from the pivoting axis have formed on them in each case a latching edge (12.3), by means of which the blocking lever (12) can be latched in a releasable manner on corresponding latching protrusions (13.5) of the triggering lever (13), said latching protrusions being formed on the lever arms (13.1) of the triggering lever (13).

13. Snap trap (1) according to anyone of claims 9 to 12,
**characterized in that**
the blocking lever (12) has a latching notch (12.6), in which the striking bar (11.5) of the striking lever (11) may be latched in the standby position.

14. Snap trap (1) according to claim 13,
**characterized in that**
the blocking lever (12) has a rocker arm (12.7) which, in relation to the associated pivoting axis (C),is arranged largely opposite the lever arms (12.2) and is arranged such that, when the standby position is reached, the blocking lever (12) is pivoted by the striking lever (11), via the rocker arm (12.7), such that the latching notch (12.6) grips the striking bar (11.5).

15. Snap trap (1) according to anyone of claims 9 to 14,
**characterized in that**
a blocking-spring element (12.4) is present, by means of which the triggering lever (13) can be pre-tensioned against the blocking lever (12) during transfer from the striking position into the standby position, wherein the blocking-spring element (12.4) is formed in one piece with the blocking lever (12) and acts on the triggering lever (13) such that the latter can be forced by a spring force, in the region of its latching protrusions (13.5), against the latching edges (12.3) of the blocking lever (12).

16. Snap trap (1) according to anyone of claims 1 to 15,
**characterized in that**
the entry region (E) is at least double the length of the striking region (S).

17. Snap trap (1) according to anyone of claims 1 to 16,
**characterized in that**
the striking-spring element (11.6) is formed as a leg spring (11.6) and symmetrically to a longitudinal center plane of the housing (2), which center plane is perpendicular to the floor, wherein the leg spring (11.6) has two coils (11.11) which are connected via a bracket (11.10), are arranged in associated accommodating spaces (11.9) of the striking lever (11), have a coil axis arranged coaxially in relation to the pivoting axis (B) of the striking lever (11) and are at least partially encased on the outside by walls of the accommodating spaces (11.9) so as to ensure that the coils (11.11) are retained in a shaftless manner, wherein the bracket (11.10) is supported on the striking lever (11).

## Revendications

1. Piège à frappe (1) pour petits animaux tels que souris ou rats comportant un dispositif de frappe (10), lequel peut être placé dans une position de frappe et une position de disponibilité, comprenant un boîtier (2) avec un fond (6) et un compartiment intérieur (5) allongé ouvert aux deux extrémités longitudinales, à l'une extrémité longitudinale duquel une ouverture d'entrée (3) vers une section d'entrée (E) du boîtier (2) est disposée et à l'autre extrémité longitudinale duquel le dispositif de frappe (10) est disposé dans une zone de frappe (S) du boîtier (2), sachant que le dispositif de frappe (10) comprend un levier de frappe (11) et un levier de déclenchement (13), et le levier de frappe (11) peut être précontraint contre la force de ressort d'un élément ressort de frappe (11.6) lors d'un passage de la position de frappe à la position de disponibilité, sachant que le levier de frappe (11) peut être arrêté directement ou indirectement de manière détachable dans la position de disponibilité par le levier de déclenchement (13) et le levier de déclenchement (13) est disposé de telle façon que l'arrêt du levier de frappe (11) soit détachable par un petit animal présent dans le compartiment intérieur (5) via le levier de déclenchement (13),
**caractérisé en ce que**
le dispositif de frappe (10) est constitué pour la clôture intégrale d'une ouverture (8) terminale du compartiment intérieur (5) dans la zone de frappe (S) du boîtier (2) lorsque le dispositif de frappe est dans la position de frappe, sachant que le dispositif de frappe (10) présente une ou plusieurs sections de paroi (11.1, 12.1), lesquelles closent l'ouverture (8) terminale du compartiment intérieur (5) dans la position de frappe, sachant que la / les sections de paroi (11.1, 12.1) est / sont disposée/s dans et/ou sur l'ouverture (8) terminale du compartiment intérieur (5) dans la position de frappe, sachant qu'une section de paroi (11.1) est constituée au niveau du levier de frappe (11).

2. Piège à frappe (1) selon la revendication 1,
**caractérisé en ce que**
le levier de frappe (11) est logé au niveau du boîtier (2) de façon pivotable autour d'un axe de pivotement (B) géométrique disposé transversalement à la direction longitudinale (A) et parallèlement au fond (6) du boîtier (2), sachant que l'axe de pivotement (B) est disposé dans une zone proche du fond à l'extrémité longitudinale du compartiment intérieur (5) qui est éloignée de l'ouverture d'entrée.

3. Piège à frappe selon la revendication 2,
**caractérisé en ce que**
le levier de frappe (11) présente une plaque de frappe (11.3) munie d'une barrette de frappe (11.5), laquelle s'avance dans le compartiment intérieur (5) et est montée au niveau du levier de frappe (11) de façon sensiblement perpendiculaire dans une zone éloignée de l'axe de pivotement.

4. Piège à frappe selon l'une des revendications 2 ou 3,
**caractérisé en ce que**
le levier de frappe (11) présente une potence d'actionnement (11.2), avec laquelle le levier de frappe (11) est pivotable de l'extérieur à la façon d'un cran de sûreté contre la force de l'élément ressort de frappe (11.6) vers l'extérieur en éloignement du compartiment intérieur (5) pour amener le dispositif de frappe de la position de frappe à la position de disponibilité.

5. Piège à frappe (1) selon l'une des revendications 1 à 4,
**caractérisé en ce que**
le levier de déclenchement est logé au niveau du boîtier (2) de façon pivotable autour d'un axe de pivotement (D) géométrique disposé transversalement à la direction longitudinale (A) et parallèlement au fond (6) du boîtier (2).

6. Piège à frappe (1) selon la revendication 5,
**caractérisé en ce que**
le levier de déclenchement (13) présente deux bras de levier (13.1), lesquels s'étendent latéralement le long de parois latérales du boîtier (2), côté intérieur, en éloignement de l'axe de pivotement (D) du levier de déclenchement (13).

7. Piège à frappe (1) selon la revendication 6,
**caractérisé en ce que**
une plateforme de marche (13.2), laquelle s'étend près du fond (6) transversalement à travers le compartiment intérieur (5), est constituée à des extrémités des bras de levier (13.1) du levier de déclenchement (13) qui sont éloignées de l'axe de pivotement.

8. Piège à frappe (1) selon la revendication 7,
**caractérisé en ce que**
le levier de déclenchement (13), en cas de pivotement autour de son axe de pivotement (D), est guidé dans la zone de la plateforme de marche (13.2) en un guidage courbe (2.1) au niveau du boîtier (2) via des cames de guidage (13.3) disposées latéralement.

9. Piège à frappe (1) selon l'une des revendications 1 à 8,
**caractérisé en ce que**
le dispositif de frappe (10) comprend un levier de blocage (12), lequel est arrêtable de façon détachable au niveau du levier de déclenchement (13) dans la position de disponibilité et au niveau duquel le levier de frappe (11) est arrêtable de façon détachable dans la position de disponibilité.

10. Piège à frappe (1) selon la revendication 9,
**caractérisé en ce que**
le levier de blocage (12) est logé au niveau du boîtier (2) de façon pivotable autour d'un axe de pivotement (C) géométrique disposé transversalement à la direction longitudinale (A) du boîtier (2) et parallèlement au fond (6).

11. Piège à frappe (1) selon l'une des revendications 9 ou 10,
**caractérisé en ce que**
une section de paroi (11.1, 12.1) est constituée respectivement au niveau du levier de frappe (11) ainsi qu'au niveau du levier de blocage (12), lesquelles sections de paroi (11.1, 12.1) forment conjointement une clôture terminale, de préférence intégrale, du compartiment intérieur (5) dans la position de frappe.

12. Piège à frappe (1) selon la revendication 11,
**caractérisé en ce que**
le levier de blocage (12) présente deux bras de levier (12.2), lesquels s'étendent latéralement le long de parois latérales du boîtier (2), côté intérieur, depuis l'axe de pivotement (C) du levier de blocage (12) en direction du levier de déclenchement (13), sachant que respectivement une arête d'encliquetage (12.3), avec laquelle le levier de blocage (12) est encliquetable de façon détachable au niveau de saillies d'encliquetage (13.5) correspondantes du levier de déclenchement (13), lesquelles sont constituées au niveau des bras de levier (13.1) du levier de déclenchement (13), est constituée aux extrémités des bras de levier (12.2) du levier de blocage (12) qui sont éloignées de l'axe de pivotement.

13. Piège à frappe (1) selon l'une des revendications 9 à 12,
**caractérisé en ce que**
le levier de blocage (12) présente une encoche d'encliquetage (12.6), dans laquelle la barrette de frappe (11.5) du levier de frappe (11) est encliquetable dans la position de disponibilité.

14. Piège à frappe (1) selon la revendication 13,
**caractérisé en ce que**
le levier de blocage (12) présente un bras de bascule (12.7) disposé de façon sensiblement opposée par rapport à l'axe de pivotement (C) afférent des bras de levier (12.2), lequel est disposé de telle façon que, lorsque la position de disponibilité est atteinte, le levier de blocage (12) est pivoté de telle façon par le levier de frappe (11) via le bras de bascule (12.7) que l'encoche d'encliquetage (12.6) capte la barrette de frappe (11.5).

15. Piège à frappe (1) selon l'une des revendications 9 à 14,
**caractérisé en ce que**
un élément ressort de blocage (12.4) est présent, avec lequel le levier de déclenchement (13) peut être précontraint contre le levier de blocage (12) lors du passage de la position de frappe à la position de disponibilité, sachant que l'élément ressort de blocage (12.4) est constitué d'une seule pièce avec le levier de blocage (12) et agit de telle façon sur le levier de déclenchement (13) que celui-ci puisse être soumis à une force de ressort contre les arêtes d'encliquetage (12.3) du levier de blocage (12) dans la zone de ses saillies d'encliquetage (13.5).

16. Piège à frappe (1) selon l'une des revendications 1 à 15,
**caractérisé en ce que**
la zone d'entrée (E) est au moins deux fois aussi longue que la zone de frappe (S).

17. Piège à frappe (1) selon l'une des revendications 9 à 16,
**caractérisé en ce que**
l'élément ressort de frappe (11.6) est constitué comme ressort à branches (11.6) et de façon symétrique par rapport à un plan médian longitudinal du boîtier (2) perpendiculaire au fond, sachant que le ressort à branches (11.6) présente deux enroulements (11.11) reliés par un étrier (11.10) et disposés dans des compartiments de logement (11.9) afférents du levier de frappe (11), lesquels sont disposés avec un axe d'enroulement coaxialement à l'axe de pivotement (B) du levier de frappe (11) et sont entourés côté extérieur au moins en partie par des parois des compartiments de logement (11.9) de telle façon qu'une fixation sans axe des enroulements (11.11) soit garantie, sachant que l'étrier (11.10) est soutenu au niveau du levier de frappe (11).
